# EUROPÄISCHE PATENTANMELDUNG

(11) **EP 3 181 404 A1**
(43) Veröffentlichungstag der Anmeldung: **21.06.2017**
(21) Anmeldenummer: 16201629.9
(22) Anmeldetag: 01.12.2016
(51) Int. Cl.: B60Q 1/52, B60Q 1/28, B60Q 1/30, B60Q 7/00, F21V 33/00, B60Q 1/26, G09F 13/22

(54) **LEUCHTVORRICHTUNG FÜR EIN FAHRZEUG**

(30) Priorität: 18.12.2015 DE 102015225931
(71) Anmelder: Vogler, Yvonne, 35614 Aßlar (DE); Vogler, Alexander, 35614 Aßlar (DE)
(72) Erfinder: Vogler, Yvonne, 35614 Aßlar (DE)
(74) Vertreter: Liedtke, Markus

(57) **Zusammenfassung**

Die Erfindung betrifft eine Leuchtvorrichtung (1) für ein Fahrzeug (20). Die Leuchtvorrichtung (1) umfasst einen biegbaren, an einer gekrümmten Oberfläche befestigbaren Leuchtmittelträger (3) und wenigstens ein auf dem Leuchtmittelträger (3) angeordnetes Leuchtmittel (5, 7), das zur Aussendung von Licht aktivierbar ist.

## Beschreibung

Die Erfindung betrifft eine Leuchtvorrichtung für ein Fahrzeug. Unter einem Fahrzeug wird hier ein Verkehrsmittel mit oder ohne eigenen Antrieb verstanden. Beispielsweise ist also auch ein Anhänger ein Fahrzeug im Sinne der hier beschriebenen Erfindung.

Fahrzeuge weisen Fahrzeugleuchten wie Fahrzeugscheinwerfer, Fahrtrichtungsanzeiger und Bremsleuchten auf, um insbesondere bei Dunkelheit eine Fahrzeugumgebung ausreichend zu beleuchten und von anderen Verkehrsteilnehmern wahrgenommen zu werden. Ein Ausfall einer Fahrzeugleuchte eines Fahrzeugs kann die Sicherheit sowohl der Fahrzeuginsassen als auch von Verkehrsteilnehmern in einer Fahrzeugumgebung erheblich gefährden und die Verkehrssicherheit des Fahrzeugs beeinträchtigen.

Der Erfindung liegt die Aufgabe zu Grunde, eine Leuchtvorrichtung für ein Fahrzeug zur Erhöhung der Verkehrssicherheit des Fahrzeugs anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Eine erfindungsgemäße Leuchtvorrichtung für ein Fahrzeug umfasst einen biegbaren, an einer gekrümmten Oberfläche befestigbaren Leuchtmittelträger und wenigstens ein auf dem Leuchtmittelträger angeordnetes Leuchtmittel, das zur Aussendung von Licht aktivierbar ist.

Die Erfindung ermöglicht vorteilhaft, bei einem Ausfall einer Fahrzeugleuchte eines Fahrzeugs temporär eine erfindungsgemäße Leuchtvorrichtung an dem Fahrzeug anzuordnen, um das von dem Ausfall der Fahrzeugleuchte verursachte Sicherheitsrisiko zu reduzieren. Die Biegsamkeit des Leuchtmittelträgers und dessen Befestigbarkeit an gekrümmten Oberflächen ermöglicht dabei insbesondere, die Leuchtvorrichtung direkt auf einer transparenten Abdeckung der ausgefallenen Fahrzeugleuchte anzuordnen, so dass insbesondere bei Dunkelheit weiterhin Licht von der Position der ausgefallenen Fahrzeugleuchte ausgesendet werden kann.

Beispielsweise kann beim Ausfall eines Frontscheinwerfers eines Automobils durch eine auf einer transparenten Abdeckung des ausgefallenen Frontscheinwerfers angeordnete erfindungsgemäße Leuchtvorrichtung dieser Frontscheinwerfer emuliert werden, so dass die Ausmaße des Automobils weiterhin von sich vor dem Automobil befindenden Verkehrsteilnehmern erkannt werden und das Automobil nicht beispielsweise bei Dunkelheit mit einem Motorrad verwechselt wird. Analog kann eine ausgefallene Schluss- oder Bremsleuchte am Heck eines Fahrzeugs durch eine erfindungsgemäße Leuchtvorrichtung emuliert werden und damit das Fahrzeug bei Dunkelheit für sich hinter dem Fahrzeug befindende Verkehrsteilnehmer anzeigen.

Mit der Leuchtvorrichtung kann eine ausgefallene Fahrzeugleuchte beispielsweise solange emuliert werden, bis die Fahrzeugleuchte, beispielsweise in einer Werkstatt, instand gesetzt oder ausgetauscht wird. Die Leuchtvorrichtung kann vorteilhaft wie eine Warnweste, ein Warndreieck oder ein Verbandkasten ständig in dem Fahrzeug mitgeführt werden, um erforderlichenfalls sofort verfügbar zu sein.

Eine Ausführungsform der Erfindung sieht wenigstens ein elektrisches Leuchtmittel und eine an dem Leuchtmittelträger angeordnete Batterie zur Energieversorgung des wenigstens einen elektrischen Leuchtmittels vor. Beispielsweise ist wenigstens ein elektrisches Leuchtmittel eine Leuchtdiode. Durch elektrische Leuchtmittel und eine Batterie zu deren Energieversorgung kann die Leuchtvorrichtung vorteilhaft unabhängig von einer Energieversorgung durch das Fahrzeug betrieben und flexibel und in einfacher Weise an dem Fahrzeug angeordnet werden. Leuchtdioden eignen sich aufgrund ihrer geringen Ausmaße und hohen Lebensdauer besonders vorteilhaft als elektrische Leuchtmittel.

Alternativ oder zusätzlich weist die Leuchtvorrichtung wenigstens ein chemisches Leuchtmittel auf, das zur Aussendung von Licht durch Chemilumineszenz aktivierbar ist. Ein derartiges Leuchtmittel ermöglicht ebenfalls einen von einer Energieversorgung durch das Fahrzeug unabhängigen und dadurch flexiblen Betrieb der Leuchtvorrichtung. Geeignete chemische Leuchtmittel weisen beispielsweise gemäß dem Prinzip eines so genannten Leuchtstabes voneinander getrennt gelagerte Stoffe auf, die durch eine mechanische Einwirkung, beispielsweise ein Biegen des chemischen Leuchtmittels, miteinander vermischt werden und die Chemilumineszenz bewirken.

Ausgestaltungen der Erfindung sehen vor, dass die Leuchtvorrichtung zur Aussendung weißen und/oder roten und/oder gelben Lichts durch Aktivierung wenigstens eines Leuchtmittels ausgebildet ist. Diese Ausgestaltungen der Erfindung ermöglichen beispielsweise vorteilhaft die Emulation von weißem Licht, das von Scheinwerfern eines Fahrzeugs ausgesendet wird, und/oder von rotem Licht, das von Schluss- oder Bremsleuchten eines Fahrzeugs ausgesendet wird, und/oder von gelbem Licht, das von Fahrtrichtungsanzeigern eines Fahrzeugs ausgesendet wird.

Eine weitere Ausgestaltung der Erfindung sieht vor, dass wenigstens ein Leuchtmittel zur Aussendung von Blinklicht aktivierbar ist. Unter Blinklicht wird hier Licht verstanden, das periodisch seine Lichtintensität verändert, einschließlich des Falles, dass die Lichtintensität periodisch verschwindet. Diese Ausgestaltung ermöglicht vorteilhaft, insbesondere ein Warnblinklicht zu emulieren, beispielsweise nach einem Unfall am Unfallort und/oder beim Abschleppen des Fahrzeugs, falls eine Warnblinkfunktion des Fahrzeugs durch den Unfall ausfällt.

Weitere Ausgestaltungen der Erfindung sehen vor, dass der Leuchtmittelträger eine wenigstens teilweise mit einem Haftklebstoff beschichtete Trägerseite und/oder eine Clipverbindung und/oder wenigstens einen magnetischen Bereich zur Befestigung des Leuchtmittelträgers an der gekrümmten Oberfläche aufweist. Diese Ausgestaltungen der Erfindung ermöglichen jeweils eine einfache und schnelle Befestigung der Leuchtvorrichtung an dem Fahrzeug, die universell, d. h. unabhängig von dem Fahrzeugtyp einsetzbar ist.

Gemäß den obigen Ausführungen sieht die Erfindung die Verwendung einer erfindungsgemäßen Leuchtvorrichtung bei einem Ausfall einer Fahrzeugleuchte eines Fahrzeugs vor, wobei die Leuchtvorrichtung an dem Fahrzeug, vorzugsweise auf einer transparenten Abdeckung der ausgefallenen Fahrzeugleuchte, angeordnet und zur Aussendung von Licht aktiviert wird.

Ausführungsbeispiele der Erfindung werden im Folgenden anhand von Zeichnungen näher erläutert.

Darin zeigen:
- Figur 1: schematisch eine perspektivische Darstellung einer Leuchtvorrichtung für ein Fahrzeug, und
- Figur 2: schematisch eine perspektivische Darstellung eines Fahrzeugs und einer an dem Fahrzeug angeordneten Leuchtvorrichtung.

Einander entsprechende Teile sind in allen Figuren mit den gleichen Bezugszeichen versehen.

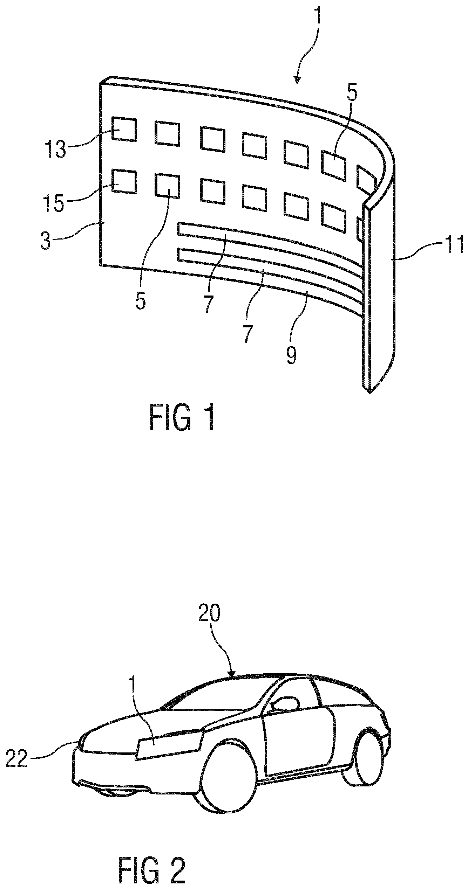

**Figur 1** zeigt schematisch eine Leuchtvorrichtung 1 für ein Fahrzeug 20 (siehe Figur 2) in einer perspektivischen Darstellung. Die Leuchtvorrichtung 1 umfasst einen biegbaren Leuchtmittelträger 3 und mehrere auf dem Leuchtmittelträger 3 angeordnete Leuchtmittel 5, 7, die zur Aussendung von Licht aktivierbar sind.

Der Leuchtmittelträger 3 ist flächig ausgebildet, d. h. er hat eine Trägerdicke, die deutlich kleiner ist als die Ausdehnungen zweier sich gegenüberliegenden Trägerseiten 9, 11, die voneinander einen die Trägerdicke definierenden Abstand aufweisen. Die Leuchtmittel 5, 7 sind auf einer ersten Trägerseite 9 angeordnet.
Die der ersten Trägerseite 9 gegenüberliegende zweite Trägerseite 11 ist mit einem Haftklebstoff beschichtet, um den Leuchtmittelträger 3 auf einer gekrümmten Oberfläche zu befestigen. Der Leuchtmittelträger 3 ist beispielsweise als ein Heftpflaster oder als ein Gummiband ausgebildet, auf dessen erster Trägerseite 9 die Leuchtmittel 5, 7 angeordnet sind und dessen zweite Trägerseite 11 eine Klebefläche ist.

Die Leuchtmittel 5, 7 dieses Ausführungsbeispiels umfassen elektrische Leuchtmittel 5 und chemische Leuchtmittel 7.

Die elektrischen Leuchtmittel 5 sind Leuchtdioden, die beispielsweise mehrere zueinander parallele Zeilen nebeneinander angeordneter Leuchtmittel 5 bilden.
Zur Energieversorgung der elektrischen Leuchtmittel 5 weist die Leuchtvorrichtung 1 eine an dem Leuchtmittelträger 3 angeordnete Batterie 13 auf, mit der die elektrischen Leuchtmittel 5 über einen Schalter 15 elektrisch verbindbar und dadurch zur Aussendung von Licht aktivierbar sind.

Die chemischen Leuchtmittel 7 sind zur Aussendung von Licht durch Chemilumineszenz aktivierbar. Dazu weist jedes chemische Leuchtmittel 7 gemäß dem Prinzip eines so genannten Leuchtstabes voneinander getrennt gelagerte Stoffe auf, die durch eine mechanische Einwirkung, beispielsweise ein Biegen des chemischen Leuchtmittels 7, miteinander vermischt werden und die Chemilumineszenz bewirken.

Die Leuchtvorrichtung 1 ist dazu ausgebildet, wahlweise rotes, gelbes oder weißes Licht durch Aktivierung jeweils verschiedener Leuchtmittel 5, 7 auszusenden. Dazu ist eine erste Teilmenge der Leuchtmittel 5, 7 zur Aussendung weißen Lichts, eine zweite Teilmenge der Leuchtmittel 5, 7 zur Aussendung roten Lichts und eine dritte Teilmenge der Leuchtmittel 5, 7 zur Aussendung gelben Lichts aktivierbar, wobei die Aktivierung der jeweiligen Teilmenge durch den Schalter 15 und/oder die mechanische Aktivierung chemischer Leuchtmittel 7 erfolgt. Optional ist wenigstens ein elektrisches Leuchtmittel 5 dazu ausgebildet, Blinklicht, beispielsweise gelbes Blinklicht, auszusenden, um beispielsweise ein Warnblinklicht des Fahrzeugs 20 zu emulieren.

In alternativen Ausführungsbeispielen der Erfindung weist die Leuchtvorrichtung 1 entweder nur elektrische Leuchtmittel 5 oder nur chemische Leuchtmittel 7 auf, und/oder die Leuchtvorrichtung 1 ist dazu ausgebildet, entweder nur weißes oder nur rotes Licht oder nur gelbes Licht auszusenden.

**Figur 2** zeigt schematisch ein Fahrzeug 20 und eine an dem Fahrzeug 20 angeordnete Leuchtvorrichtung 1 in einer perspektivischen Darstellung. Die Leuchtvorrichtung 1 wird bei einem Ausfall einer Fahrzeugleuchte 22 des Fahrzeugs 20 an dem Fahrzeug 20 angeordnet und zur Aussendung von Licht aktiviert. Vorzugsweise wird die Leuchtvorrichtung 1 dabei auf eine transparente Abdeckung der ausgefallenen Fahrzeugleuchte 22 aufgebracht. In Figur 2 ist dies für eine als ein Frontscheinwerfer ausgebildete Fahrzeugleuchte 22 dargestellt. Analog kann eine Leuchtvorrichtung 1 auf eine transparente Abdeckung einer ausgefallenen Fahrzeugleuchte 22 aufgebracht werden, die als eine Schluss- oder Bremsleuchte, ein Fahrtrichtungsanzeiger oder ein Positionslicht ausgebildet ist. Die Leuchtvorrichtung 1 wird vorzugsweise zur Aussendung von Licht aktiviert, dessen Farbe der Farbe des von der jeweiligen ausgefallenen Fahrzeugleuchte 22 auszusendenden Lichts (Weiß, Gelb oder Rot) entspricht.

Alternativ oder zusätzlich kann eine Leuchtvorrichtung 1 auch an einem anderen Ort an dem Fahrzeug 20 angeordnet werden, beispielsweise von innen oder außen an einer Windschutzscheibe oder Heckscheibe des Fahrzeugs 20, beispielsweise wenn durch einen Unfall die zu ersetzende Fahrzeugleuchte 22 und/oder deren Umgebung zerstört ist.

### BEZUGSZEICHENLISTE

- 1: Leuchtvorrichtung
- 3: Leuchtmittelträger
- 5: elektrisches Leuchtmittel
- 7: chemisches Leuchtmittel
- 9, 11: Trägerseite
- 13: Batterie
- 15: Schalter
- 20: Fahrzeug
- 22: Fahrzeugleuchte

## Patentansprüche

1. Leuchtvorrichtung (1) für ein Fahrzeug (20), die Leuchtvorrichtung (1) umfassend
- einen biegbaren, an einer gekrümmten Oberfläche befestigbaren Leuchtmittelträger (3)
- und wenigstens ein auf dem Leuchtmittelträger (3) angeordnetes Leuchtmittel (5, 7), das zur Aussendung von Licht aktivierbar ist, wobei
- wenigstens ein Leuchtmittel (5, 7) ein elektrisches Leuchtmittel (5) ist und die Leuchtvorrichtung (1) eine an dem Leuchtmittelträger (3) angeordnete Batterie (13) zur Energieversorgung des wenigstens einen elektrischen Leuchtmittels (5) aufweist,
- oder/und wenigstens ein Leuchtmittel (5, 7) ein chemisches Leuchtmittel (7) ist, das zur Aussendung von Licht durch Chemilumineszenz aktivierbar ist.

2. Leuchtvorrichtung (1) nach Anspruch 1,
**dadurch gekennzeichnet, dass** wenigstens ein elektrisches Leuchtmittel (5) eine Leuchtdiode ist.

3. Leuchtvorrichtung (1) nach einem der vorhergehenden Ansprüche,
**dadurch gekennzeichnet, dass** die Leuchtvorrichtung (1) zur Aussendung weißen Lichts durch Aktivierung wenigstens eines Leuchtmittels (5, 7) ausgebildet ist.

4. Leuchtvorrichtung (1) nach einem der vorhergehenden Ansprüche,
**dadurch gekennzeichnet, dass** die Leuchtvorrichtung (1) zur Aussendung roten Lichts durch Aktivierung wenigstens eines Leuchtmittels (5, 7) ausgebildet ist.

5. Leuchtvorrichtung (1) nach einem der vorhergehenden Ansprüche,
**dadurch gekennzeichnet, dass** die Leuchtvorrichtung (1) zur Aussendung gelben Lichts durch Aktivierung wenigstens eines Leuchtmittels (5, 7) ausgebildet ist.

6. Leuchtvorrichtung (1) nach einem der vorhergehenden Ansprüche,
**dadurch gekennzeichnet, dass** wenigstens ein Leuchtmittel (5, 7) zur Aussendung von Blinklicht aktivierbar ist.

7. Leuchtvorrichtung (1) nach einem der vorhergehenden Ansprüche,
**dadurch gekennzeichnet, dass** der Leuchtmittelträger (3) eine wenigstens teilweise mit einem Haftklebstoff beschichtete Trägerseite (11) und/oder eine Clipverbindung und/oder wenigstens einen magnetischen Bereich zur Befestigung des Leuchtmittelträgers (3) an der gekrümmten Oberfläche aufweist.

8. Verwendung einer Leuchtvorrichtung (1) nach einem der vorhergehenden Ansprüche, wobei die Leuchtvorrichtung (1) bei einem Ausfall einer Fahrzeugleuchte (22) eines Fahrzeugs (20) an dem Fahrzeug (20) angeordnet und zur Aussendung von Licht aktiviert wird.

9. Verwendung nach Anspruch 8,
**dadurch gekennzeichnet, dass** die Leuchtvorrichtung (1) auf eine transparente Abdeckung der ausgefallenen Fahrzeugleuchte (22) aufgebracht wird.
